# EUROPEAN PATENT APPLICATION

(11) **EP 4 163 867 A1**
(43) Date of publication of application: **12.04.2023**
(21) Application number: 20939646.4
(22) Date of filing: 09.06.2020
(51) Int. Cl.: G06T 7/00, G06T 7/20

(54) **DECISION PROGRAM, DECISION DEVICE, AND DECISION METHOD**

(71) Applicant: FUJITSU LIMITED, Kawasaki-shi, Kanagawa 211-8588 (JP)
(72) Inventor: SAITO, Junya, Kawasaki-shi, Kanagawa 211-8588 (JP); UCHIDA, Akiyoshi, Kawasaki-shi, Kanagawa 211-8588 (JP); YOSHII, Akihito, Kawasaki-shi, Kanagawa 211-8588 (JP); MORIOKA, Kiyonori, Kawasaki-shi, Kanagawa 211-8588 (JP); MURASE, Kentaro, Kawasaki-shi, Kanagawa 211-8588 (JP)
(74) Representative: Hoffmann Eitle
(86) International application number: PCT/JP2020/022725
(87) International publication number: WO 2021/250786

(57) **Abstract**

A determination program causes a computer to execute processing of acquiring a group of captured images that are continuously captured and include a face to which markers are attached. The determination program causes the computer to execute processing of selecting, from a plurality of patterns indicating a transition of positions of the markers, a first pattern corresponding to a time-series change in the positions of the markers included in a plurality of consecutive images among the group of captured images. In the determination, the computer is caused to execute processing of determining occurrence intensity of an action unit based on a determination criterion of the action unit determined based on the first pattern and the positions of the markers included in a captured image included after the plurality of images among the group of captured images.

## Description

### FIELD

The present invention relates to a determination program, a determination device, and a determination method.

### BACKGROUND

Facial expressions play an important role in nonverbal communication. Estimation of facial expressions is an essential technology for developing computers that understand people and assist the people. In order to estimate facial expressions, it is first needed to specify a method of describing facial expressions. An action unit (AU) is known as the method of describing facial expressions. AUs are facial movements related to expression of facial expressions, defined based on anatomical knowledge of facial muscles, and technologies for estimating the AUs have also been proposed so far.

A representative form of an AU estimation engine that estimates AUs is based on machine learning based on a large volume of teacher data, and image data of facial expressions and occurrence (presence or absence of occurrence) and intensity (occurrence intensity) of each AU are used as the teacher data. Furthermore, occurrence and intensity of the teacher data are subjected to annotation by a specialist called a coder.

### CITATION LIST

### PATENT DOCUMENT

Patent Document 1: Japanese Laid-open Patent Publication No. 2011-237970

### NON-PATENT DOCUMENT

Non-Patent Document 1: X. Zhang, L. Yin, J. Cohn, S. Canavan, M. Reale, A. Horowitz, P. Liu, and J. M. Girard. BP4D-spontaneous: A high-resolution spontaneous 3d dynamic facial expression database. Image and Vision Computing, 32, 2014. 1

### SUMMARY

### [TECHNICAL PROBLEM]

However, existing methods have a problem that it may be difficult to generate teacher data for AU estimation. For example, since annotation by a coder is costly and time-consuming, it is difficult to create a large volume of data. Furthermore, in movement measurement of each facial part based on image processing of facial images, it is difficult to accurately capture small changes, and it is difficult for a computer to make AU determination from the facial images without human judgment. Therefore, it is difficult for the computer to generate teacher data in which AU labels are attached to the facial images without human judgment.

In one aspect, it is an object to generate teacher data for AU estimation.

### [SOLUTION TO PROBLEM]

In one aspect, a determination program causes a computer to execute processing of acquiring a group of captured images that are continuously captured and include a face to which markers are attached. The determination program causes the computer to execute processing of selecting, from a plurality of patterns indicating a transition of positions of the markers, a first pattern corresponding to a time-series change in the positions of the markers included in a plurality of consecutive images among the group of captured images. The determination program causes the computer to execute processing of determining occurrence intensity of an action unit based on a determination criterion of the action unit determined based on the first pattern and the positions of the markers included in a captured image included after the plurality of images among the group of captured images.

According to an aspect of the embodiments, a determination program that causes a computer to execute a process, the process includes acquiring a group of captured images that are continuously captured and include a face to which markers are attached; selecting, from a plurality of patterns that indicates a transition of positions of the markers, a first pattern that corresponds to a time-series change in the positions of the markers included in a plurality of consecutive images among the group of captured images; and determining occurrence intensity of an action unit based on a determination criterion of the action unit determined based on the first pattern and the positions of the markers included in a captured image included after the plurality of images among the group of captured images.

### [ADVANTAGEOUS EFFECTS OF INVENTION]

In one aspect, it is possible to generate teacher data for AU estimation.

### BRIEF DESCRIPTION OF DRAWINGS

FIG. 1 is a diagram illustrating a configuration example of a determination system according to a first embodiment;
FIG. 2 is a diagram illustrating an example of arrangement of cameras according to the first embodiment;
FIG. 3 is a diagram illustrating an example of movements of markers according to the first embodiment;
FIG. 4 is a diagram illustrating an example of a determination method of occurrence intensity according to the first embodiment;
FIG. 5 is a diagram illustrating an example of a movement transition in a vertical direction for a position of a marker according to the first embodiment;
FIG. 6 is a diagram illustrating an example of a deviation of the position of the marker between an expressionless trial and true expressionlessness according to the first embodiment;
FIG. 7 is a block diagram illustrating a configuration example of a determination device according to the first embodiment;
FIG. 8 is a diagram illustrating an example of selection of an expressionless transition pattern according to the first embodiment;
FIG. 9 is a diagram illustrating an example of matching of time-series data and the expressionless transition pattern according to the first embodiment;
FIG. 10 is a diagram illustrating a specific example of the determination method of the occurrence intensity according to the first embodiment;
FIG. 11 is a diagram illustrating an example of a generation method of a mask image for removing a marker according to the first embodiment;
FIG. 12 is a diagram illustrating an example of a marker removal method according to the first embodiment;
FIG. 13 is a diagram illustrating a configuration example of an estimation system according to a second embodiment;
FIG. 14 is a block diagram illustrating a configuration example of an estimation device according to the second embodiment;
FIG. 15 is a flowchart illustrating an example of a flow of determination processing according to the first embodiment;
FIG. 16 is a flowchart illustrating an example of a flow of estimation processing according to the second embodiment; and
FIG. 17 is a diagram illustrating a hardware configuration example according to the first and second embodiments.

### DESCRIPTION OF EMBODIMENTS

Hereinafter, embodiments of a determination program, a determination device, and a determination method according to the present disclosure will be described in detail with reference to the drawings. Note that the present disclosure is not limited by the embodiments. Furthermore, the individual embodiments may be appropriately combined within a range without inconsistency.

### [First Embodiment]

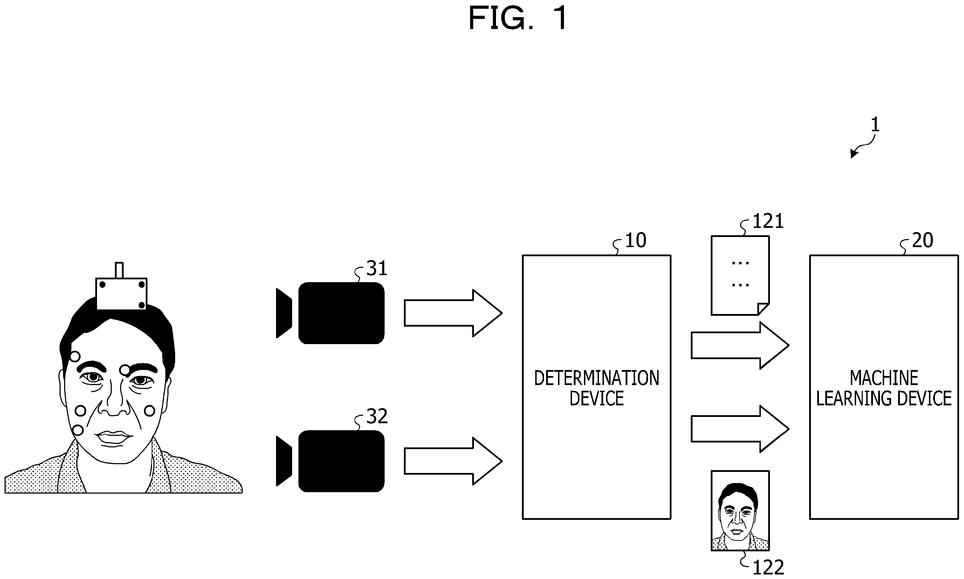

A configuration of a determination system according to an embodiment will be described with reference to FIG. 1. FIG. 1 is a diagram illustrating a configuration of a determination system according to a first embodiment. As illustrated in FIG. 1, a determination system 1 includes a red, green, and blue (RGB) camera 31, an infrared (IR) camera 32, a determination device 10, and a machine learning device 20.

As illustrated in FIG. 1, first, the RGB camera 31 and the IR camera 32 are oriented toward a face of a person to which markers are attached. For example, the RGB camera 31 is a common digital camera, which receives visible light and generates an image. Furthermore, for example, the IR camera 32 senses infrared rays. Furthermore, the markers are, for example, IR reflection (retroreflection) markers. The IR camera 32 may perform motion capture by using IR reflection by the markers. Furthermore, in the following description, a person to be captured will be referred to as a subject.

The determination device 10 acquires an image captured by the RGB camera 31, and a result of motion capture by the IR camera 32. Then, the determination device 10 outputs, to the machine learning device 20, occurrence intensity 121 of an AU and an image 122 obtained by removing the markers from the captured image by image processing. For example, the occurrence intensity 121 may be data in which occurrence intensity of each AU is expressed by six-level evaluation using 0 to 1 and annotation such as "AU 1: 2, AU 2: 5, AU 4: 0,..." has been performed. Furthermore, the occurrence intensity 121 may be data in which occurrence intensity of each AU is expressed by 0, which means no occurrence, or by five-level evaluation of A to E and annotation such as "AU 1: B, AU 2: E, AU 4: 0,..." has been performed. Moreover, the occurrence intensity is not limited to be expressed by five-level evaluation and may also be expressed by, for example, two-level evaluation (presence or absence of occurrence).

The machine learning device 20 performs machine learning by using the image 122 and the occurrence intensity 121 of an AU output from the determination device 10 and generates a model for calculating an estimated value of occurrence intensity of an AU from an image. The machine learning device 20 may use the occurrence intensity of the AU as a label. Note that the processing of the machine learning device 20 may be performed by the determination device 10. In this case, the machine learning device 20 does not have to be included in the determination system 1.

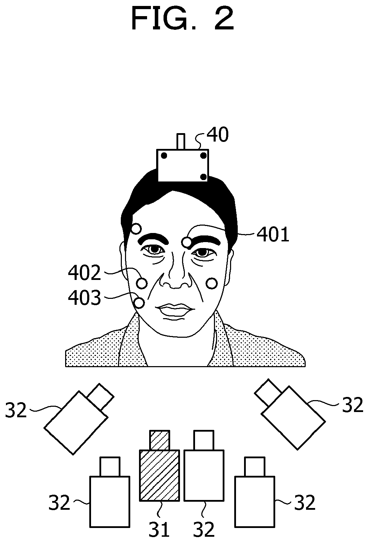

Here, arrangement of cameras will be described with reference to FIG. 2. FIG. 2 is a diagram illustrating an example of the arrangement of the cameras according to the first embodiment. As illustrated in FIG. 2, a plurality of the IR cameras 32 may configure a marker tracking system. In that case, the marker tracking system may detect positions of IR reflection markers by stereoscopic image capturing. Furthermore, it is assumed that a relative positional relationship between each of the plurality of IR cameras 32 is corrected in advance by camera calibration.

Furthermore, a plurality of markers is attached to the face of the subject to be captured to cover target AUs (for example, an AU 1 to an AU 28). Positions of the markers change according to a change in a facial expression of the subject. For example, a marker 401 is arranged near a root of an eyebrow. Furthermore, a marker 402 and a marker 403 are arranged near a smile line. The markers may be arranged on skin corresponding to one or more AUs and movements of muscles of facial expressions. Furthermore, the markers may be arranged by avoiding positions on the skin where a change in texture is large due to wrinkling or the like.

Moreover, the subject wears an instrument 40 to which reference markers are attached. It is assumed that positions of the reference markers attached to the instrument 40 do not change even when a facial expression of the subject changes. Accordingly, the determination device 10 may detect a change in the positions of the markers attached to the face based on a change in the relative positions from the reference markers. Furthermore, the determination device 10 may specify coordinates of each marker on a plane or in a space based on the positional relationship with the reference marker. Note that the determination device 10 may determine the positions of the markers from a reference coordinate system, or may determine them from a projection position of a reference plane. Furthermore, by setting the number of reference markers to three or more, the determination device 10 may specify the positions of the markers in a three-dimensional space.

The instrument 40 is, for example, a headband, in which the reference markers are arranged outside a contour of the face. Furthermore, the instrument 40 may be a virtual reality (VR) headset, a mask formed of a rigid material, or the like. In that case, the determination device 10 may use a rigid surface of the instrument 40 as the reference markers.

The determination device 10 determines presence or absence of occurrence of each of the plurality of AUs based on a determination criterion of the AUs and the positions of the plurality of markers. The determination device 10 determines occurrence intensity for one or more AUs occurred among the plurality of AUs.

For example, the determination device 10 determines occurrence intensity of a first AU based on a movement amount of a first marker calculated based on a distance between a reference position of the first marker associated with the first AU included in the determination criterion and a position of the first marker. Note that, it may be said that the first marker is one or a plurality of markers corresponding to a specific AU.

The determination criterion of the AUs indicates, for example, one or a plurality of markers used to determine, for each AU, occurrence intensity of the AU among the plurality of markers. The determination criterion of the AUs may include reference positions of the plurality of markers. The determination criterion of the AUs may include, for each of the plurality of AUs, a relationship (conversion rule) between occurrence intensity and a movement amount of a marker used to determine the occurrence intensity. Note that the reference positions of the markers may be determined according to each position of the plurality of markers in a captured image in which the subject is in an expressionless state (no AU has occurred).

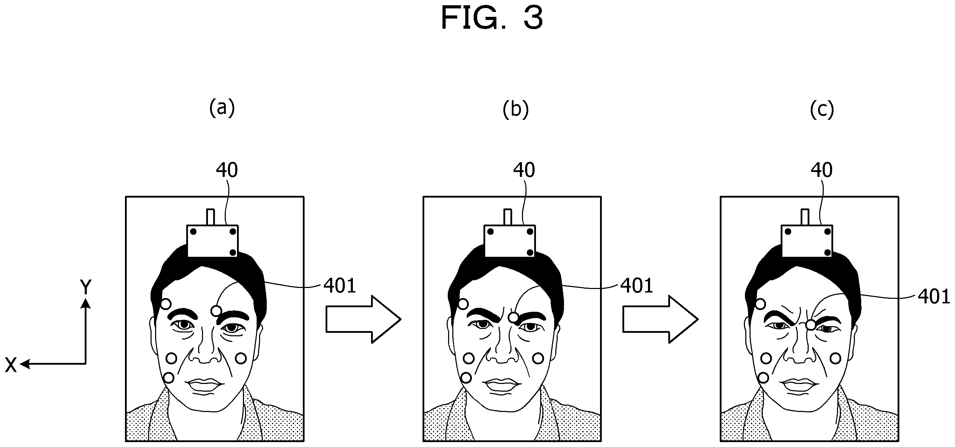

Here, movements of markers will be described with reference to FIG. 3. FIG. 3 is a diagram illustrating an example of movements of markers according to the first embodiment. In FIG. 3, (a), (b), and (c) are images captured by the RGB camera 31. Furthermore, it is assumed that the images are captured in the order of (a), (b), and (c). For example, (a) is an image when the subject is expressionless. The determination device 10 may regard positions of the markers in the image (a) as reference positions where the movement amount is 0.

As illustrated in FIG. 3, the subject has a facial expression of pulling eyebrows together. At this time, the position of the marker 401 moves in a downward direction in accordance with the change in the facial expression. At that time, the distance between the position of the marker 401 and the reference marker attached to the instrument 40 is large.

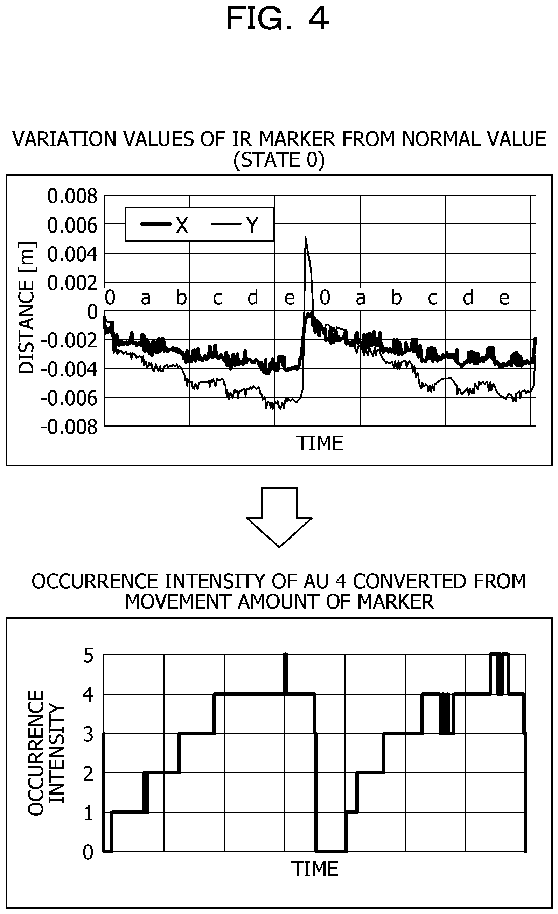

Furthermore, variation values in the distance from the reference marker of the marker 401 in an X direction and a Y direction are represented as in FIG. 4. FIG. 4 is a diagram illustrating an example of a determination method of occurrence intensity according to the first embodiment. As illustrated in FIG. 4, the determination device 10 may convert the variation values into occurrence intensity. Note that the occurrence intensity may be quantized in five levels according to a facial action coding system (FACS), or may be defined as a continuous amount based on a variation amount.

Various rules may be considered as a rule for the determination device 10 to convert the variation amount into the occurrence intensity. The determination device 10 may perform conversion in accordance with one predetermined rule, or may perform conversion according to a plurality of rules to adopt the one with the largest occurrence intensity.

For example, the determination device 10 may in advance acquire the maximum variation amount, which is a variation amount when the subject changes the facial expression most, and may convert the occurrence intensity based on a ratio of the variation amount to the maximum variation amount. Furthermore, the determination device 10 may determine the maximum variation amount by using data tagged by a coder by an existing method. Furthermore, the determination device 10 may linearly convert the variation amount into the occurrence intensity. Furthermore, the determination device 10 may perform conversion by using an approximation expression created from preliminary measurement of a plurality of subjects.

Furthermore, for example, the determination device 10 may determine the occurrence intensity based on a movement vector of the first marker calculated based on the position preset as the determination criterion and the position of the first marker specified by a selection unit 142. In this case, the determination device 10 determines the occurrence intensity of the first AU based on a degree of matching between the movement vector of the first marker and a vector associated in advance with the first AU. Furthermore, the determination device 10 may correct correspondence between the magnitude of the vector and the occurrence intensity by using an existing AU estimation engine.

An example of the determination method of the occurrence intensity of an AU based on the variation amount of the positions of the markers from the reference markers attached to the instrument 40 has been described above. However, the measurement of the positions of the markers from the reference markers may deviate due to deviation of the instrument 40 or the like, and it is needed to periodically calibrate the reference position of each marker.

In the calibration of the reference marker, for example, the subject is rendered expressionless, and the position of each marker from the reference marker attached to the instrument 40 at that time is determined as the reference position. Therefore, it is important for the subject to become truly expressionless, which is expressionlessness at rest, but it takes some time for the subject to become truly expressionless, even though the subject intends to be expressionless, due to tension and relaxation of muscles caused by the change in the facial expression and habit of the skin.

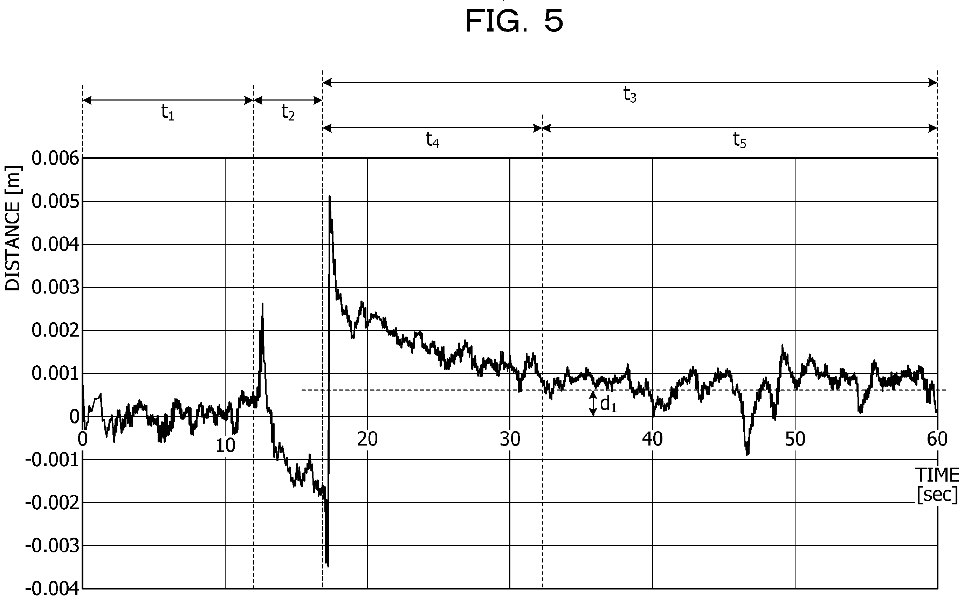

FIG. 5 is a diagram illustrating an example of a movement transition in a vertical direction for a position of a marker according to the first embodiment. FIG. 5 illustrates a movement transition of the position of the marker 401 when the subject who was expressionless during an expressionless trial time t₁, which indicates a time to try to become expressionless from a non-expressionless state, made a frowning facial expression during t₂, and became expressionless again during an expressionless trial time t₃. As indicated in FIG. 5, when the facial expression is made expressionless during t₃, the facial expression does not immediately become the true expressionless state indicated by t₅, and it is understood that a transition state of about 15 seconds indicated by t₄ has passed. Therefore, there is a problem that, even though the subject intends to be expressionless, when the expressionless trial time is insufficient and the subject immediately made another facial expression, accuracy of the calibration of the reference position deteriorates.

When such a problem occurs, accuracy of presence or absence of occurrence of an AU and occurrence intensity calculated based on the positions of the markers deteriorates. Furthermore, from a viewpoint of creating teacher data for implementing highly accurate AU estimation, it is needed to perform image capturing many times so that various variations may be covered regarding subjects, emotional expressions such as anger and laughter, image capturing conditions such as image capturing locations and lighting, and the like. Therefore, there is a problem that a time needed to create the teacher data becomes enormous when the expressionless trial time of the subject is made long. Thus, even when the expressionless trial time of the subject is short, estimated values of virtual positions of the markers in the true expressionless state are calculated.

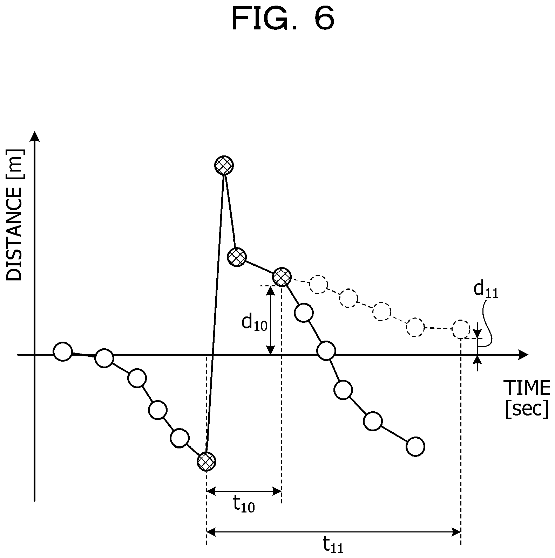

FIG. 6 is a diagram illustrating an example of a deviation of the position of the marker between an expressionless trial and true expressionlessness according to the first embodiment. In FIG. 6, it is indicated that the subject made another facial expression with the intention of becoming expressionless during an expressionless trial time t₁₀, and a distance from the reference marker became d₁₀, resulting in a large error. Furthermore, a solid line after the expressionless trial time t₁₀ indicates the movement transition of the position of the marker from the reference marker.

On the other hand, a dashed line after the expressionless trial time t₁₀ indicates the movement transition of the position of the marker from the reference marker in a case where the subject continues to remain in the expressionless state and becomes truly expressionless. As illustrated in FIG. 6, the expressionless trial time t₁₀ is not sufficient to achieve the true expressionless state, and a time of an expressionless trial time t₁₁ is needed. Thus, in the present embodiment, an estimated value of a virtual position of the marker in the true expressionless state at the time point when the expressionless trial time t₁₁ has elapsed is calculated from the movement transition of the position of the marker during the expressionless trial time t₁₀, and more accurate occurrence intensity of an AU is determined.

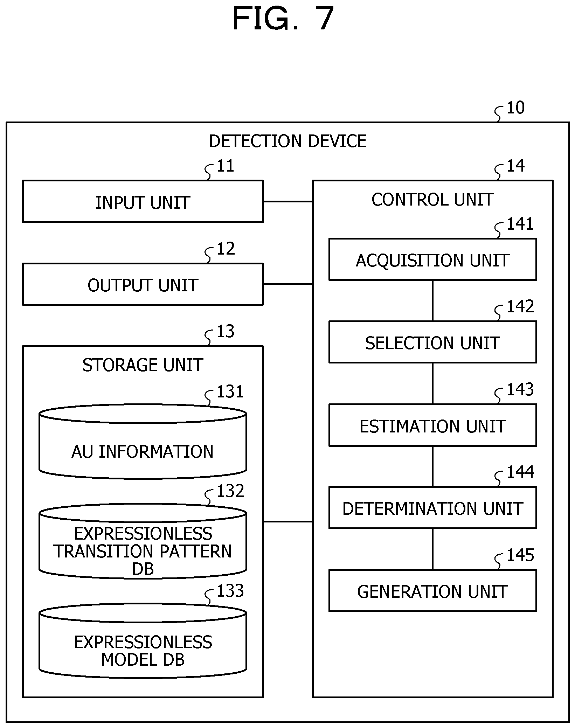

A functional configuration of the determination device 10 according to the first embodiment will be described with reference to FIG. 7. FIG. 7 is a block diagram illustrating a configuration example of the determination device. As illustrated in FIG. 7, the determination device 10 includes an input unit 11, an output unit 12, a storage unit 13, and a control unit 14.

The input unit 11 is an interface for inputting data. For example, the input unit 11 receives an input of data via input devices such as the RGB camera 31, the IR camera 32, a mouse, and a keyboard. Furthermore, the output unit 12 is an interface for outputting data. For example, the output unit 12 outputs data to an output device such as a display.

The storage unit 13 is an example of a storage device that stores data and a program or the like executed by the control unit 14, and is, for example, a hard disk, a memory, or the like. The storage unit 13 stores AU information 131, an expressionless transition pattern DB 132, and an expressionless model DB 133.

The AU information 131 is information representing a correspondence relationship between markers and AUs.

The expressionless transition pattern DB 132 stores time-series patterns of a position of a marker a certain time before a start time of an expressionless trial and a position of the marker during the expressionless trial. The data in the expressionless transition pattern DB 132 is data created by capturing an image of a subject in advance, with a sufficient expressionless trial time set so as to achieve a true expressionless state.

The expressionless model DB 133 stores a model generated by machine learning with a position of a marker at a certain time before a start time of an expressionless trial as a feature and a position of the marker at the time of true expressionlessness as a correct answer label.

The control unit 14 is a processing unit that controls the entire determination device 10, and includes an acquisition unit 141, the selection unit 142, an estimation unit 143, a determination unit 144, and a generation unit 145.

The acquisition unit 141 acquires a captured image including a face. For example, the acquisition unit 141 acquires a group of captured images that are continuously captured and include a face of a subject to which a marker is attached to each of a plurality of positions corresponding to a plurality of AUs. The captured images acquired by the acquisition unit 141 are captured by the RGB camera 31 and the IR camera 32 as described above.

Here, when an image is captured by the RGB camera 31 and the IR camera 32, the subject changes facial expressions. At this time, the subject may change the facial expressions freely, or may change the facial expressions according to a predetermined scenario. With this configuration, the RGB camera 31 and the IR camera 32 may capture, as the images, how the facial expressions change in time series. Furthermore, the RGB camera 31 may also capture a moving image. In other words, the moving image may be regarded as a plurality of still images arranged in time series.

Furthermore, the acquisition unit 141 acquires time-series data of the position of the marker from the group of captured images. The time-series data of the position of the marker is data indicating a movement transition of the position of the marker acquired by specifying the position of the marker included in each of the group of captured images captured in time series. Note that, since the captured image includes the plurality of markers, the time-series data is acquired for each marker. Furthermore, the position of the marker may be a relative position from a reference position of the marker, and the reference position of the marker may be a position set based on a position of the marker during an expressionless trial time before the acquisition of the time-series data.

Furthermore, the acquisition unit 141 acquires a start time and an end time of an expressionless trial from, for example, a record of an expressionless instruction time to the subject. Alternatively, in addition to the processing described above, the acquisition unit 141 may detect the expressionless trial time and acquire the start time and the end time of the expressionless trial of the face by referring to the time-series data and determining that the position of the marker has converged to the position at the time of expressionlessness. Note that, in a case where a plurality of the expressionless trial times is detected, the acquisition unit 141 may acquire the start times and the end times corresponding to the detected expressionless trial times. Then, the plurality of expressionless trial times detected in this manner may be set as candidates for the expressionless trial time. In this manner, by detecting the expressionless trial time, it is possible to reduce trouble of recording the expressionless trial time in advance and to determine occurrence intensity of an AU by using more reliable expressionless trial time.

The selection unit 142 selects, from a plurality of patterns indicating a transition of a position of a marker, a pattern corresponding to a time-series change in the position of the marker included in a plurality of consecutive images among a group of captured images.

More specifically, the selection unit 142 selects, from the expressionless transition pattern DB 132, an expressionless transition pattern having the smallest difference in the position of the marker from a specific position of the marker in time-series data acquired by the acquisition unit 141 for a specific position of the marker a certain time before a start time of an expressionless trial.

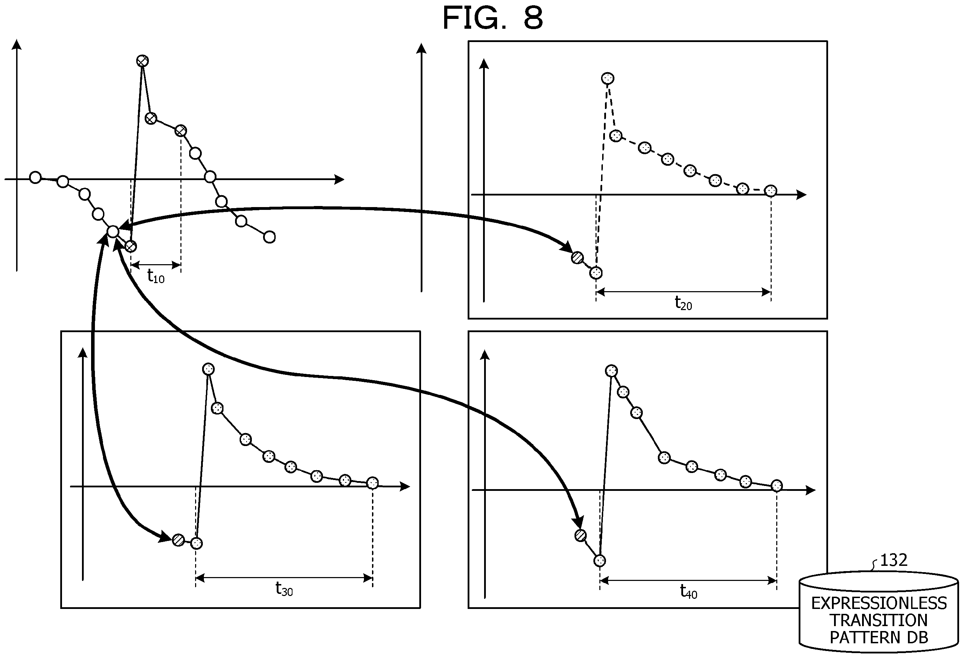

FIG. 8 is a diagram illustrating an example of the selection of the expressionless transition pattern according to the first embodiment. In FIG. 8, an upper left pattern is the time-series data acquired by the acquisition unit 141, and other three patterns are expressionless transition patterns stored in the expressionless transition pattern DB 132.

As illustrated in FIG. 8, for example, a position of the marker a certain time before the start time of the expressionless trial in the time-series data is compared with a specific position of the marker a certain time before the start time of the expressionless trial in each of the expressionless transition patterns stored in the expressionless transition pattern DB 132. Then, an expressionless transition pattern having the smallest difference in the position of the marker from the specific position of the marker in the time-series data is selected. For example, in the example of FIG. 8, an expressionless transition pattern on an upper right is selected as the pattern having the smallest difference in the position of the marker from the specific position of the marker in the time-series data. Note that, although only three expressionless transition patterns are illustrated in FIG. 8 for convenience, more expressionless transition patterns are actually stored in the expressionless transition pattern DB 132 as selection candidates.

Furthermore, based on a set plurality of candidates for an expressionless trial time, the selection unit 142 selects, from the expressionless transition pattern DB 132, a plurality of expressionless transition patterns in ascending order of the difference in the position of the marker from the specific position of the marker in the time-series data acquired by the acquisition unit 141, for example. Since the time-series data acquired by the acquisition unit 141 may include a plurality of the expressionless trial times, in that case, an expressionless transition pattern is selected for each of the plurality of expressionless trial times.

Furthermore, in addition to the processing described above, the selection unit 142 may match each of the expressionless transition patterns with the specific position of the marker between the start time and an end time of the time-series data acquired by the acquisition unit 141. Then, the expressionless transition pattern having the smallest difference in the position of the marker from the specific position of the marker in the time-series data may be selected. With this configuration, it is possible to select a more appropriate expressionless transition pattern.

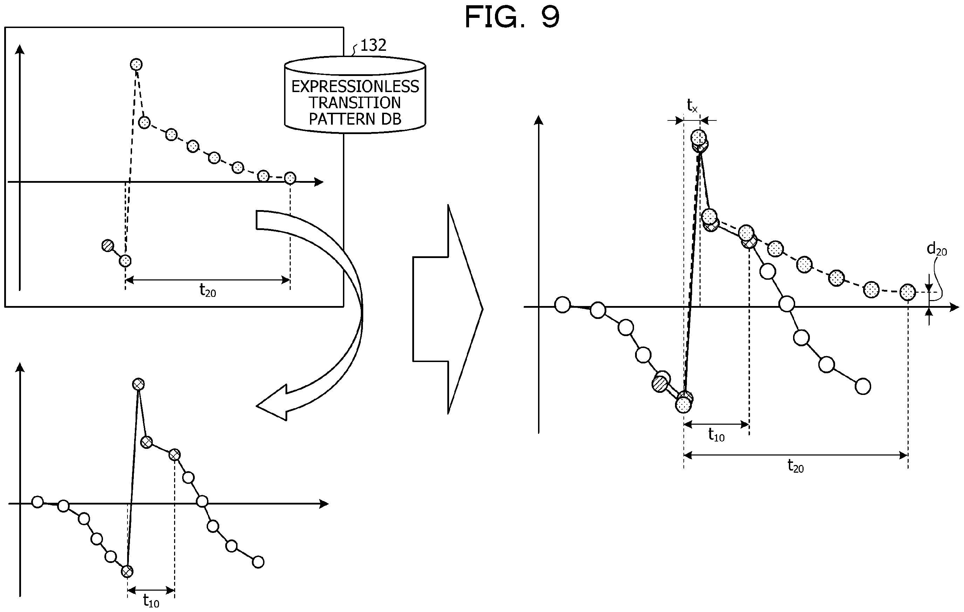

Here, the matching of the expressionless transition pattern with the time-series data will be described. FIG. 9 is a diagram illustrating an example of the matching of the time-series data and the expressionless transition pattern according to the first embodiment. As illustrated in FIG. 9, the position of the marker of the expressionless transition pattern is matched with the position of the marker between the start time and the end time of the time-series data, in other words, during the expressionless trial time t₁₀.

In the matching, in addition to the processing described above, for example, the position of the marker may be adjusted to minimize a square error by translation in a time direction, and scaling and translation in a marker position direction for the expressionless trial times t₁₀ and t₂₀. Note that the translation in the time direction is intended to correct a deviation of the start time of the expressionless trial, and the scaling and the translation in the marker position direction are intended to correct a steady deviation of the position of the marker due to a deviation of the instrument 40 or the like.

Furthermore, in the matching, in addition to the processing described above, the expressionless transition pattern may be matched with the time-series data excluding near the start time of the expressionless trial. The expressionless transition pattern near the start time of the expressionless trial is, for example, the position of the marker during a time tₓ indicated on a right side of FIG. 9. Since the position of the marker near the start time of the expressionless trial has a large dispersion, by excluding this from the matching, stability of the matching may be improved.

FIG. 9 illustrates an example in which the expressionless transition pattern may be accurately matched with the time-series data. Therefore, after t₁₀, which is the end time of the expressionless trial when the facial expression has transitioned to another facial expression, has elapsed, an estimated value of a virtual position of the marker in a case where the expressionless state continues may be calculated by using the position of the marker of the matched expressionless transition pattern. In particular, an estimated value of a virtual position of the marker in a true expressionless state may be calculated based on a distance d₂₀ of the position of the marker at the time point when t₂₀, which is the end time of the expressionless trial of the expressionless transition pattern, has elapsed.

Furthermore, the selection unit 142 extracts, from the expressionless transition pattern DB 132, a plurality of expressionless transition patterns in ascending order of the difference in the position of the marker from a specific position of the marker a certain time before the start time of the expressionless trial time, for example. Then, the selection unit 142 selects an expressionless transition pattern having the smallest difference in the position of the marker from a specific position of the marker in the time-series data by matching the position of the marker of each of the extracted plurality of expressionless transition patterns with the specific position of the marker between the start time and the end time of the time-series data.

Note that the selection of the expressionless transition pattern by the selection unit 142 may be performed from among expressionless transition patterns corresponding to physical features of a target subject based on physical feature data of each subject further stored in the expressionless transition pattern DB 132. The physical feature data includes, for example, a degree of aging, skin age, actual age, a degree of obesity, height, weight, a body mass index (BMI), sex, race, and the like of the subject.

Furthermore, in addition to the processing described above, the selection of the expressionless transition pattern by the selection unit 142 may be performed based on positions of a plurality of markers attached to a face. This may be performed by storing, in the expressionless transition pattern DB 132, time-series patterns of positions of the plurality of markers attached to the face a certain time before the start time of the expressionless trial and positions of the plurality of markers attached to the face during the expressionless trial. With this configuration, it is possible to take muscles and skin conditions of the entire face of the subject into consideration, and select a more appropriate expressionless transition pattern.

Furthermore, in addition to the processing described above, the selection of the expressionless transition pattern by the selection unit 142 may be performed based on a multi-dimensional, two-dimensional or three-dimensional position of the marker. This may be performed by storing, in the expressionless transition pattern DB 132, time-series patterns of a multi-dimensional position of the marker a certain time before the start time of the expressionless trial and a multi-dimensional position of the marker during the expressionless trial. With this configuration, it is possible to select a more appropriate expressionless transition pattern.

The estimation unit 143 matches an expressionless transition pattern selected by the selection unit 142 with time-series data acquired by the acquisition unit 141. Then, based on the matched expressionless transition pattern, an estimated value of a virtual position of a marker at the time of true expressionlessness is calculated. In the case of the example of FIG. 9, the estimated value of the virtual position of the marker at the time of true expressionlessness may be calculated based on the distance d₂₀ of the position of the marker at the time when t₂₀, which is the end time of the expressionless trial of the expressionless transition pattern, has elapsed.

Furthermore, the estimation unit 143 may match each of selected plurality of expressionless transition patterns with the time-series data and select, as a final expressionless trial time, an expressionless trial time of an expressionless transition pattern having the smallest difference in the position of the marker from a specific position of the marker in the time-series data. Then, the estimation unit 143 may calculate the estimated value of the virtual position of the marker at the time of true expressionlessness based on the expressionless transition pattern having the smallest difference in the position of the marker from the specific position of the marker in the time-series data. Alternatively, the estimation unit 143 may determine a position of the marker at an end time of the selected final expressionless trial time to be the position of the marker at the time of true expressionlessness.

Furthermore, in addition to the processing described above, the matching of the plurality of expressionless transition patterns may be performed so that a square error may be minimized by performing, on the position of each marker of the expressionless transition pattern, translation in a time direction, and scaling and translation in a marker position direction, for the time-series data. With this configuration, a more appropriate expressionless transition pattern may be selected after correcting a steady deviation of the position of the marker due to a deviation of the start time of the expressionless trial, a deviation of the instrument 40, or the like. Furthermore, in addition to the processing described above, in the matching of the plurality of expressionless transition patterns, stability of the matching may be improved by performing the matching excluding the position of the marker near the start time of the expressionless trial having a large dispersion.

The determination unit 144 determines occurrence intensity of an AU based on the determination criterion of the AU determined based on an expressionless transition pattern selected by the selection unit 142 and a position of a marker included in a captured image included after a plurality of images among a group of captured images.

More specifically, the determination unit 144 calculates a movement amount of the position of the marker for a position of the marker after an end time of time-series data acquired by the acquisition unit 141, using an estimated value calculated by the estimation unit 143 as a reference, and determines occurrence intensity (intensity) of an AU. Furthermore, in addition to the processing described above, presence or absence of occurrence (occurrence) of an AU may be determined based on whether the calculated movement amount exceeds a predetermined threshold.

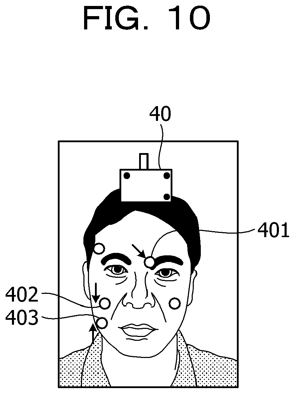

The determination method of the occurrence intensity of the AU will be described more specifically. FIG. 10 is a diagram illustrating a specific example of the determination method of the occurrence intensity according to the first embodiment. For example, it is assumed that an AU 4 vector corresponding to an AU 4 is determined in advance as (-2 mm, -6 mm). At this time, the determination unit 144 calculates an inner product of a movement vector and the AU 4 vector of the marker 401, and normalizes the inner product by the magnitude of the AU 4 vector. Here, when the inner product matches the magnitude of the AU 4 vector, the determination unit 144 determines occurrence intensity of the AU 4 as 5 out of the five levels. On the other hand, when the inner product is a half of the AU 4 vector, for example, in the case of the linear conversion rule described above, the determination unit 144 determines the occurrence intensity of the AU 4 as 3 out of the five levels.

Furthermore, for example, as illustrated in FIG. 10, it is assumed that the magnitude of an AU 11 vector corresponding to an AU 11 is determined in advance as 3 mm. At this time, when a variation amount in a distance between the marker 402 and the marker 403 matches the magnitude of the AU 11 vector, the determination unit 144 determines occurrence intensity of the AU 11 as 5 out of the five levels. On the other hand, when the variation amount in the distance is a half of the AU 4 vector, for example, in the case of the linear conversion rule described above, the determination unit 144 determines the occurrence intensity of the AU 11 as 3 out of the five levels. In this manner, the determination unit 144 may determine the occurrence intensity based on the change in the distance between a position of a first marker and a position of a second marker specified by the selection unit 142.

Moreover, the determination unit 144 may output an image subjected to image processing and the occurrence intensity of the AU in association with each other. In that case, the generation unit 145 generates an image by executing image processing for removing markers from a captured image.

The generation unit 145 creates a data set in which a group of captured images and occurrence intensity of an AU are associated with each other. By performing machine learning using the data set, it is possible to generate a model for calculating an estimated value of occurrence intensity of an AU from a group of captured images. Furthermore, the generation unit 145 removes markers from the group of captured images by image processing as needed. The removal of the markers will be specifically described.

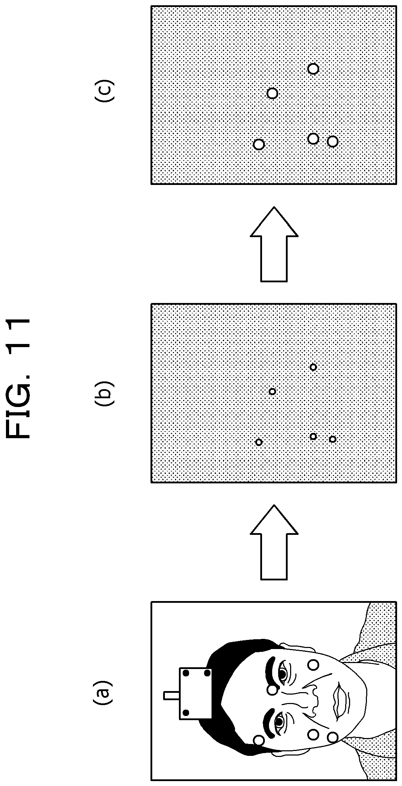

The generation unit 145 may remove markers by using a mask image. FIG. 11 is an explanatory diagram for describing a generation method of a mask image according to the first embodiment. In FIG. 11, (a) is an image captured by the RGB camera 31. First, the generation unit 145 extracts a color of a marker intentionally attached in advance, and defines the extracted color as a representative color. Then, as (b) in FIG. 11, the generation unit 145 generates an area image of a color in the vicinity of the representative color. Moreover, as in (c) in FIG. 11, the generation unit 145 performs processing such as contraction or expansion on the color area in the vicinity of the representative color, and generates a mask image for removing the markers. Furthermore, accuracy of extracting the color of the marker may be improved by setting the color of the marker to the color that hardly exists as the color of a face.

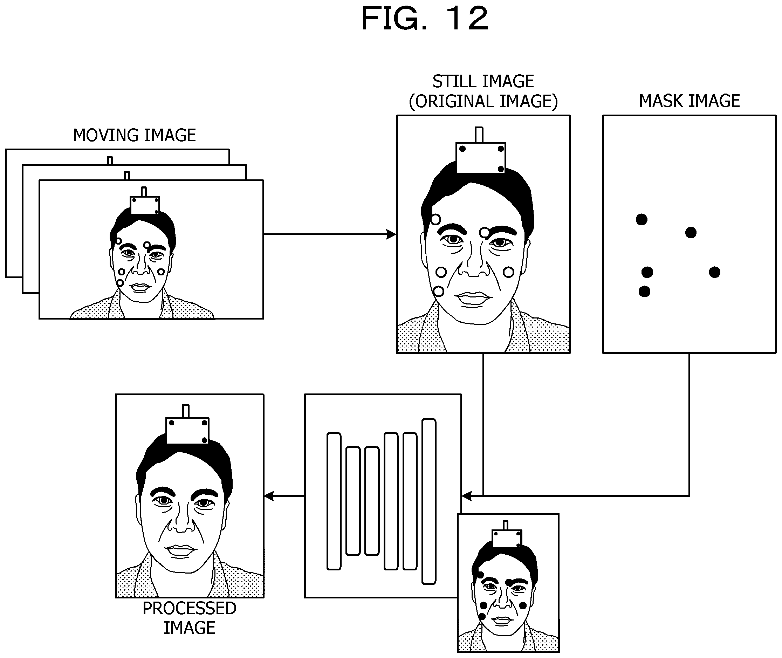

FIG. 12 is an explanatory diagram for describing a marker removal method according to the first embodiment. As illustrated in FIG. 12, first, the generation unit 145 applies a mask image to a still image acquired from a moving image. Moreover, the generation unit 145 inputs the image to which the mask image is applied to, for example, a neural network, and obtains a processed image. Note that it is assumed that the neural network has been trained by using an image of a subject with a mask, without a mask, or the like. Note that acquiring the still image from the moving image has an advantage that data in the middle of a change in the facial expression may be obtained and that a large volume of data may be obtained in a short time. Furthermore, the generation unit 145 may use generative multi-column convolutional neural networks (GMCNNs) or generative adversarial networks (GANs) as the neural network.

Note that the method of removing the markers by the generation unit 145 is not limited to the one described above. For example, the generation unit 145 may detect a position of a marker based on a predetermined shape of the marker to generate a mask image. Furthermore, the relative positions of the IR camera 32 and the RGB camera 31 may be preliminary calibrated. In this case, the generation unit 145 may detect the position of the marker from information of the marker tracking by the IR camera 32.

Furthermore, the generation unit 145 may adopt different detection methods depending on markers. For example, for a marker above a nose, since a movement is small and it is possible to easily recognize the shape, the generation unit 145 may detect the position by shape recognition. Furthermore, for a marker besides a mouth, since a movement is large and it is difficult to recognize the shape, the generation unit 145 may detect the position by a method of extracting the representative color.

Furthermore, the generation unit 145 generates a model by machine learning with a position of the marker a certain time before a start time of an expressionless trial as a feature and a position of the marker at the time of true expressionlessness as a correct answer label. The generation unit 145 may also use, as the feature, at least one of a history of the position the marker and physical feature data. With this configuration, the estimation unit 143 may calculate an estimated value of the position of the marker at the time of true expressionlessness by the expressionless model DB 133 storing the model generated by the generation unit 145, even for an unknown subject. Furthermore, by using various features such as the history of the position of the marker, the estimated value of the position of the marker may be calculated with higher accuracy. Note that the generation unit 145 may also retrains the generated model by using, as training data, the feature input to the generated model and the output estimated value of the position of the marker at the time of true expressionlessness.

### [Second Embodiment]

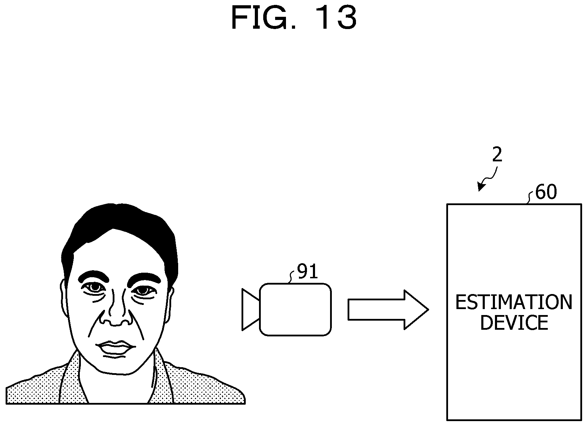

Next, a configuration of an estimation system according to an embodiment will be described with reference to FIG. 13. FIG. 13 is a diagram illustrating a configuration of an estimation system according to a second embodiment. As illustrated in FIG. 13, an estimation system 2 includes an RGB camera 91 and an estimation device 60.

As illustrated in FIG. 13, the RGB camera 91 is oriented toward a face of a person. The RGB camera 91 is, for example, a common digital camera. Furthermore, an IR camera 92 (not illustrated) may be used instead of the RGB camera 91 or together with the RGB camera 91.

The estimation device 60 acquires an image captured by the RGB camera 91. Furthermore, the estimation device 60 selects an expressionless transition pattern having the smallest difference in occurrence intensity of an AU from specific occurrence intensity of the AU acquired from a group of captured images, and calculate an estimated value of occurrence intensity of the AU at the time of true expressionlessness. Then, by using the calculated estimated value as a reference, the estimation device 60 calculates an amount of change in the occurrence intensity of the AU after an end time of an expressionless trial, which is acquired from the group of captured images, and sets the calculated amount of change as a new occurrence intensity of the AU.

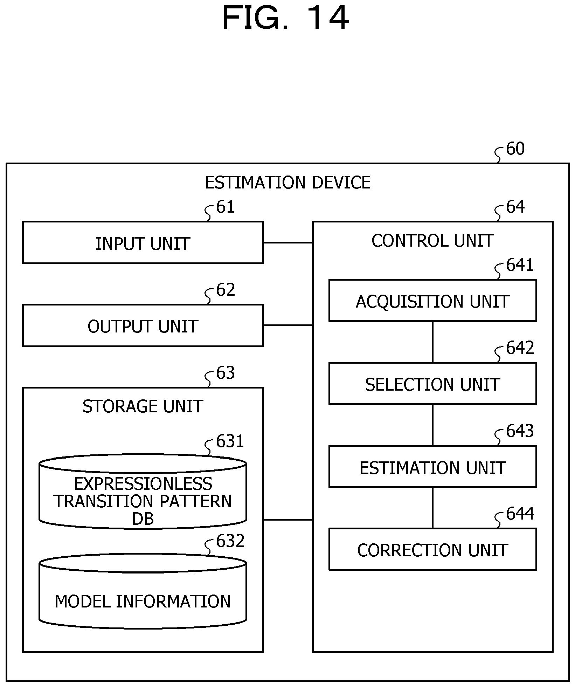

A functional configuration of the estimation device 60 will be described with reference to FIG. 14. FIG. 14 is a block diagram illustrating a configuration example of the estimation device according to the second embodiment. As illustrated in FIG. 14, the estimation device 60 includes an input unit 61, an output unit 62, a storage unit 63, and a control unit 64.

The input unit 61 is a device or an interface for inputting data. For example, the input unit 61 is the RGB camera 91, a mouse, a keyboard, or the like. Furthermore, the output unit 62 is a device or an interface for outputting data. For example, the output unit 62 is a display that displays a screen, or the like.

The storage unit 63 is an example of a storage device that stores data and a program or the like executed by the control unit 64, and is, for example, a hard disk, a memory, or the like. The storage unit 63 stores an expressionless transition pattern DB 631 and model information 632.

The expressionless transition pattern DB 631 stores time-series patterns of occurrence intensity of an AU a certain time before a start time of an expressionless trial and occurrence intensity of the AU during the expressionless trial.

The model information 632 is parameters or the like for constructing a model generated by the generation unit 145, the machine learning device 20, or the like.

The control unit 64 is a processing unit that controls the entire estimation device 60, and includes an acquisition unit 641, a selection unit 642, an estimation unit 643, and a correction unit 644.

The acquisition unit 641 acquires occurrence intensity of an AU from a group of captured images that are continuously captured. For example, the acquisition unit 641 acquires occurrence intensity of one or a plurality of AUs from a group of continuously captured images in which a face of a person to be estimated appears by using a model constructed by the model information 632. The captured images acquired by the acquisition unit 641 are captured by the RGB camera 91 as described above.

Furthermore, the acquisition unit 641 acquires a start time and an end time of an expressionless trial. These may be acquired from, for example, a record of an expressionless instruction time to the person to be estimated. Alternatively, the acquisition unit 641 may detect an expressionless trial time and acquire the start time and the end time of the expressionless trial of a face by referring to time-series data of occurrence intensity of an AU to be estimated and determining that the occurrence intensity of the AU has converged to occurrence intensity at the time of expressionlessness.

Note that, in a case where a plurality of the expressionless trial times is detected, the acquisition unit 641 may acquire the start times and the end times corresponding to the detected expressionless trial times. Then, the plurality of expressionless trial times detected in this manner may be set as candidates for the expressionless trial time.

The selection unit 642 selects, from the expressionless transition pattern DB 631, an expressionless transition pattern having the smallest difference in occurrence intensity of an AU from specific occurrence intensity of the AU to be estimated for specific occurrence intensity of the AU a certain time before a start time of an expressionless trial.

Furthermore, based on a set plurality of candidates for an expressionless trial time, the selection unit 642 selects, from the expressionless transition pattern DB 631, a plurality of expressionless transition patterns in ascending order of the difference in the occurrence intensity of the AU from specific occurrence intensity of the AU in time-series data acquired by the acquisition unit 641, for example. Since the time-series data acquired by the acquisition unit 641 may include a plurality of the expressionless trial times, in that case, an expressionless transition pattern is selected for each of the plurality of expressionless trial times.

The estimation unit 643 matches an expressionless transition pattern selected by the selection unit 642 with time-series data of specific occurrence intensity of an AU to be estimated. Then, based on the matched expressionless transition pattern, the estimation unit 643 calculates an estimated value of occurrence intensity of the AU at the time of true expressionlessness.

Furthermore, the estimation unit 643 may match each of selected plurality of expressionless transition patterns and select, as a final expressionless trial time, an expressionless trial time of an expressionless transition pattern having the smallest difference in the occurrence intensity of the AU from specific occurrence intensity of the AU in the time-series data. Then, the estimation unit 643 may calculate the estimated value of the occurrence intensity of the AU at the time of true expressionlessness based on the expressionless transition pattern having the smallest difference in the occurrence intensity of the AU from the specific occurrence intensity of the AU in the time-series data. Alternatively, the estimation unit 643 may determine occurrence intensity of the AU at an end time of the selected final expressionless trial time to be the occurrence intensity of the AU at the time of true expressionlessness.

The correction unit 644 calculates an amount of change in occurrence intensity for occurrence intensity of an AU after an end time of time-series data of the occurrence intensity of the AU to be estimated by using an estimated value calculated by the estimation unit 643 as a reference, and quantizes the calculated amount of change as needed to obtain new occurrence intensity. Depending on a person, the occurrence intensity of the AU may not be 0 even in the case of a reference expressionless state. Furthermore, by continuing to fix facial expressions for a long time, muscles and skin may acquire a habit and may not return. In such a case, by estimating occurrence intensity of the AU at the time of expressionlessness and correcting occurrence intensity of the AU calculated by an existing technology, occurrence intensity of the AU based on an appropriate criterion may be obtained. Furthermore, in a case where emotion estimation based on the occurrence intensity of the AU is performed as further subsequent processing, accuracy of the estimation may be improved.

Furthermore, the estimation device 60 may create a data set in which a group of captured images and the occurrence intensity of the AU are associated with each other. By using the data set, a trained model may be retrained.

Furthermore, the estimation device 60 may determine presence or absence of occurrence (occurrence) of an action unit based on whether an amount of change calculated by the correction unit 644 exceeds a predetermined threshold.

Furthermore, the estimation device 60 generates a model by machine learning with occurrence intensity of the AU a certain time before a start time of an expressionless trial as a feature, and further, as needed, at least one of a history of the occurrence intensity of the AU and physical feature data of each target as a feature, and occurrence intensity of the AU at the time of true expressionlessness as a label. With this configuration, the estimation unit 643 may also calculate an estimated value of derived intensity of the AU at the time of true expressionlessness by using the generated model. Furthermore, by using various features such as the history of the occurrence intensity of the AU, the estimated value of the occurrence intensity of the AU may be calculated with higher accuracy.

Note that the calculation of the estimated value of the occurrence intensity of the AU by the estimation device 60 and the determination of the occurrence intensity of the new AU may be executed not only for a single AU of a person to be estimated, but also for a plurality of AUs at the same time.

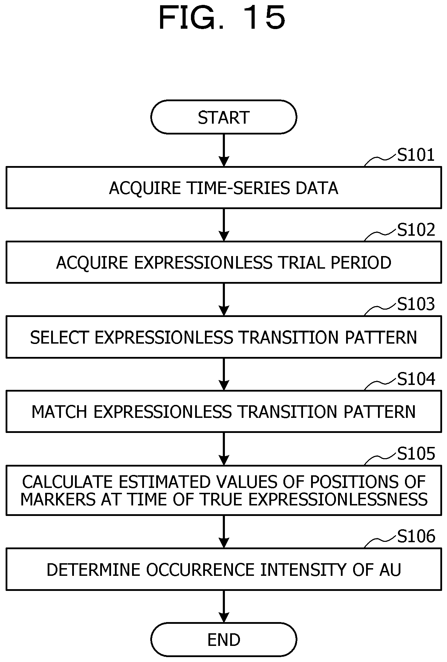

A flow of determination processing of occurrence intensity of an AU by the determination device 10 will be described with reference to FIG. 15. FIG. 15 is a flowchart illustrating an example of a flow of the determination processing according to the first embodiment. As illustrated in FIG. 15, first, the acquisition unit 141 of the determination device 10 acquires time-series data of positions of markers from a group of captured images that are continuously captured and include a face of a subject to which the markers are attached (Step S101). Next, the acquisition unit 141 acquires a start time and an end time of an expressionless trial of the face of the subject (Step S102).

Then, the selection unit 142 of the determination device 10 selects, from the expressionless transition pattern DB 132, an expressionless transition pattern having the smallest difference in the positions of the markers from specific positions of the markers in the time-series data for specific positions of the markers a certain time before the start time of the expressionless trial (Step S103).

Next, the estimation unit 143 of the determination device 10 matches the selected expressionless transition pattern with the time-series data (Step S104). Then, based on the matched expressionless transition pattern, the estimation unit 143 calculates estimated values of virtual positions of the markers at the time of true expressionlessness (Step S105).

Next, the determination unit 144 of the determination device 10 calculates a movement amount of the positions of the markers for positions of the markers after an end time of the time-series data by using the calculated estimated values as references, and determines occurrence intensity of an AU (Step S106). After Step S106, the determination processing illustrated in FIG. 15 ends.

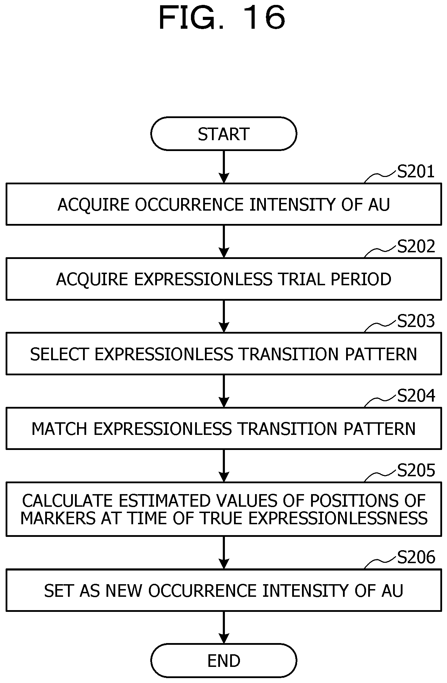

A flow of estimation processing of occurrence intensity of an AU by the estimation device 60 will be described with reference to FIG. 16. FIG. 16 is a flowchart illustrating an example of the flow of the estimation processing according to the second embodiment. As illustrated in FIG. 16, first, the acquisition unit 641 of the estimation device 60 acquires occurrence intensity of an AU from a group of captured images that are continuously captured and include a face of a person to be estimated (Step S201). Next, the acquisition unit 641 acquires a start time and an end time of an expressionless trial of the face of the person to be estimated (Step S202).

Then, the selection unit 642 of the estimation device 60 selects, from the expressionless transition pattern DB 132, an expressionless transition pattern having the smallest difference in the occurrence intensity of the AU from specific occurrence intensity of the AU in time-series data for specific occurrence intensity of the AU a certain time before the start time of the expressionless trial (Step S203).

Next, the estimation unit 643 of the estimation device 60 matches the selected expressionless transition pattern with the time-series data (Step S204). Then, based on the matched expressionless transition pattern, the estimation unit 143 calculates an estimated value of occurrence intensity of the AU at the time of true expressionlessness (Step S205).

Next, the correction unit 644 of the estimation device 60 calculates an amount of change in the occurrence intensity of the AU for occurrence intensity of the AU after an end time of the time-series data by using the calculated estimated value as a reference, and sets the calculated amount of change as new occurrence intensity of the AU (Step S206). After Step S206, the estimation processing illustrated in FIG. 16 ends.

As described above, the determination device 10 executes processing of acquiring a group of captured images that are continuously captured and include a face to which markers are attached, selecting, from a plurality of patterns indicating a transition of positions of the markers, a first pattern corresponding to a time-series change in the positions of the markers included in a plurality of consecutive images among the group of captured images, and determining occurrence intensity of an AU based on a determination criterion of the AU determined based on the first pattern and the positions of the markers included in a captured image included after the plurality of images among the group of captured images.

With this configuration, it is possible to more accurately calibrate reference positions of the markers and determine the occurrence intensity of the AU.

Furthermore, in the processing of determining the occurrence intensity executed by the determination device 10, the processing of selecting the first pattern includes processing of determining, based on a first start time of an expressionless trial of the face, the plurality of images including a first image prior to the first start time from the group of captured images, and selecting the first pattern based on the positions of the markers in the first image, and the processing of determining the occurrence intensity includes processing of calculating estimated values of virtual positions of the markers after a first end time of the expressionless trial of the face based on the first pattern, calculating a movement amount of the positions of the markers for the positions of the markers after the first end time in the group of captured images by using the calculated estimated values as references, and determining the occurrence intensity.

With this configuration, even when an expressionless trial time of a subject is short, it is possible to calculate the estimated values of the virtual positions of the markers in a true expressionless state, and calibrate the reference positions of the markers and determine the occurrence intensity of the AU more accurately.

Furthermore, by detecting an expressionless trial time by determining that the positions of the markers in the group of captured images converge to positions at the time of expressionlessness, the determination device 10 executes acquisition of the first start time and the first end time.

With this configuration, it is possible to reduce trouble of recording the expressionless trial time in advance.

Furthermore, the processing of calculating the estimated values executed by the determination device 10 includes processing of matching the positions of the markers of the first pattern with the positions of the markers in the first image by executing at least one of translation in a time direction, scaling in a marker position direction, and translation in the marker position direction, and calculating the estimated values of the virtual positions of the markers after the first end time of the expressionless trial of the face based on the first pattern with which the positions of the markers are matched.

With this configuration, a more appropriate expressionless transition pattern may be selected after correcting a deviation of the start time of the expressionless trial, or the like.

Furthermore, the processing of selecting the first pattern executed by the determination device 10 includes processing of matching each of the plurality of patterns with specific positions of the markers between the first start time and the first end time in the plurality of images, and selecting the first pattern having the smallest difference from the specific positions of the markers among the plurality of patterns.

With this configuration, it is possible to select a more appropriate expressionless transition pattern.

Furthermore, the processing of selecting the first pattern executed by the determination device 10 includes processing of selecting the first pattern based on physical features of a user who has the face.

With this configuration, it is possible to select a more appropriate expressionless transition pattern.

Furthermore, the determination device 10 further executes processing of generating data for machine learning based on the captured image included after the plurality of images and the determined determination intensity of the action unit.

With this configuration, it is possible to perform machine learning using a created data set, and generate a model for calculating the estimated values of the occurrence intensity of the AU from the group of captured images.

Pieces of information including a processing procedure, a control procedure, a specific name, various types of data, and parameters described above or illustrated in the drawings may be optionally changed unless otherwise noted. Furthermore, the specific examples, distributions, numerical values, and the like described in the embodiments are merely examples, and may be optionally changed.

Furthermore, each component of each device illustrated in the drawings is functionally conceptual, and does not necessarily have to be physically configured as illustrated in the drawings. In other words, specific forms of distribution and integration of the individual devices are not limited to those illustrated in the drawings. That is, all or a part of the devices may be configured by being functionally or physically distributed or integrated in optional units according to various loads, use situations, or the like. Moreover, all or an optional part of individual processing functions performed in each device may be implemented by a CPU and a program analyzed and executed by the CPU, or may be implemented as hardware by wired logic.

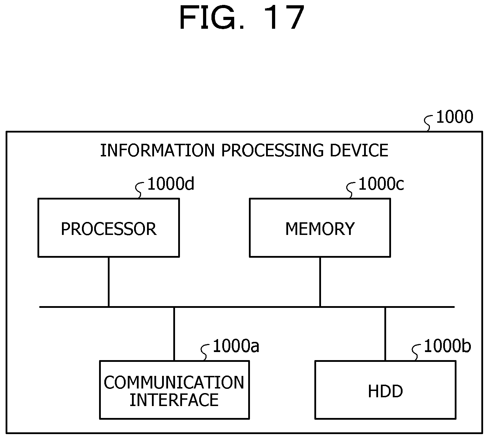

FIG. 17 is a diagram illustrating a hardware configuration example according to the first and second embodiments. Since FIG. 17 is for describing a hardware configuration of the determination device 10, the machine learning device 20, and the estimation device 60, these devices will be collectively described as an information processing device 1000 in FIG. 17. As illustrated in FIG. 17, the information processing device 1000 includes a communication interface 1000a, a hard disk drive (HDD) 1000b, a memory 1000c, and a processor 1000d. Furthermore, the respective units illustrated in FIG. 17 are mutually connected by a bus or the like.

The communication interface 1000a is a network interface card or the like, and communicates with another server. The HDD 1000b stores a program that operates the functions illustrated in FIG. 7, 14, or the like, and a DB.

The processor 1000d is a central processing unit (CPU), a micro processing unit (MPU), a graphics processing unit (GPU), or the like. Furthermore, the processor 1000d may be implemented by an integrated circuit such as an application specific integrated circuit (ASIC) or a field programmable gate array (FPGA). The processor 1000d is a hardware circuit that reads, from the HDD 1000b or the like, a program that executes processing similar to that of each processing unit illustrated in FIG. 7, 14, or the like, and loads the read program in the memory 1000c to operate a process for implementing each function described with reference to FIG. 7, 14, or the like. In other words, this process executes functions similar to the functions of each processing unit included in the determination device 10, the machine learning device 20, and the estimation device 60.

Furthermore, the information processing device 1000 may implement functions similar to the functions of the embodiments described above by reading the program described above from a recording medium by a medium reading device and executing the read program described above. Note that the program referred to in another embodiment is not limited to being executed by the information processing device 1000. For example, the present invention may be similarly applied also to a case where another computer or server executes the program, or a case where such a computer and server cooperatively execute the program.

This program may be distributed via a network such as the Internet. Furthermore, this program may be recorded in a computer-readable recording medium such as a hard disk, a flexible disk (FD), a CD-ROM, a magneto-optical disk (MO), or a digital versatile disc (DVD), and may be executed by being read from the recording medium by a computer.

### REFERENCE SIGNS LIST

1 Determination system
2 Estimation system
10 Determination device
11 Input unit
12 Output unit
13 Storage unit
14 Control unit
20 Machine learning device
31 RGB camera
32 IR camera
40 Instrument
60 Estimation device
61 Input unit
62 Output unit
63 Storage unit
64 Control unit
91 RGB camera
121 Occurrence intensity
122 Image
131 AU information
132 Expressionless transition pattern DB
133 Expressionless model DB
141 Acquisition unit
142 Selection unit
143 Estimation unit
144 Determination unit
145 Generation unit
401, 402, 403 Marker
631 Expressionless transition pattern DB
632 Model information
641 Acquisition unit
642 Selection unit
643 Estimation unit
644 Correction unit
1000 Information processing device
1000a Communication interface
1000b HDD
1000c Memory
1000d Processor

## Claims

1. A determination program that causes a computer to execute a process, the process comprising:
acquiring a group of captured images that are continuously captured and include a face to which markers are attached;
selecting, from a plurality of patterns that indicates a transition of positions of the markers, a first pattern that corresponds to a time-series change in the positions of the markers included in a plurality of consecutive images among the group of captured images; and
determining occurrence intensity of an action unit based on a determination criterion of the action unit determined based on the first pattern and the positions of the markers included in a captured image included after the plurality of images among the group of captured images.

2. The determination program according to claim 1, wherein
the processing of selecting the first pattern includes determining, based on a first start time of an expressionless trial of the face, the plurality of images that includes a first image prior to the first start time from the group of captured images, and selecting the first pattern based on the positions of the markers in the first image, and
the processing of determining the occurrence intensity includes calculating estimated values of virtual positions of the markers after a first end time of the expressionless trial of the face based on the first pattern, calculating a movement amount of the positions of the markers for the positions of the markers after the first end time in the group of captured images by using the calculated estimated values as references, and determining the occurrence intensity.

3. The determination program according to claim 2, for causing the computer to execute acquisition of the first start time and the first end time by detecting an expressionless trial time by determining that the positions of the markers in the group of captured images converge to positions at the time of expressionlessness.

4. The determination program according to claim 2, wherein the processing of calculating the estimated values includes processing of matching the positions of the markers of the first pattern with the positions of the markers in the first image by executing translation in a time direction, scaling in a marker position direction, or translation in the marker position direction, or any combination thereof, and calculating the estimated values of the virtual positions of the markers after the first end time of the expressionless trial of the face based on the first pattern with which the positions of the markers are matched.

5. The determination program according to claim 2, wherein the processing of selecting the first pattern includes processing of matching each of the plurality of patterns with specific positions of the markers between the first start time and the first end time in the plurality of images, and selecting the first pattern that has a smallest difference from the specific positions of the markers among the plurality of patterns.

6. The determination program according to claim 1, wherein the processing of selecting the first pattern includes processing of selecting the first pattern based on physical features of a user who has the face.

7. The determination program according to claim 1, for causing the computer to further execute processing of generating data for machine learning based on the captured image included after the plurality of images and the determined determination intensity of the action unit.

8. A determination device comprising:
an acquisition unit that acquires a group of captured images that are continuously captured and include a face to which markers are attached;
a selection unit that selects, from a plurality of patterns that indicates a transition of positions of the markers, a first pattern that corresponds to a time-series change in the positions of the markers included in a plurality of consecutive images among the group of captured images; and
a determination unit that determines occurrence intensity of an action unit based on a determination criterion of the action unit determined based on the first pattern and the positions of the markers included in a captured image included after the plurality of images among the group of captured images.

9. An determination method for a computer to execute a process comprising:
acquiring a group of captured images that are continuously captured and include a face to which markers are attached;
selecting, from a plurality of patterns that indicates a transition of positions of the markers, a first pattern that corresponds to a time-series change in the positions of the markers included in a plurality of consecutive images among the group of captured images; and
determining occurrence intensity of an action unit based on a determination criterion of the action unit determined based on the first pattern and the positions of the markers included in a captured image included after the plurality of images among the group of captured images.
